# EUROPÄISCHE PATENTSCHRIFT

(11) **EP 1 963 140 B1**
(45) Veröffentlichungstag und Bekanntmachung des Hinweises auf die Patenterteilung: **26.01.2011**
(21) Anmeldenummer: 06818750.9
(22) Anmeldetag: 23.11.2006
(51) Int. Cl.: B60R 19/18

(54) **STOSSFÄNGERSYSTEM FÜR EIN KRAFTFAHRZEUG**
BUMPER SYSTEM FOR A MOTOR VEHICLE
SYSTEME PARE-CHOCS POUR UN VEHICULE AUTOMOBILE

(30) Priorität: 13.12.2005 DE 102005059447
(43) Veröffentlichungstag der Anmeldung: 03.09.2008
(73) Patentinhaber: GM Global Technology Operations, Inc., Detroit, MI 48265-3000 (US)
(72) Erfinder: ERZGRÄBER, Matthias, 64291 Darmstadt (DE); HOCK, Theobald, 63762 Grossostheim (DE); WENTZIEN, Heino, 55131 Mainz (DE); GLASER, Stefan, 67105 Schifferstadt (DE); WÜST, Andreas, 64673 Zwingenberg (DE)
(74) Vertreter: Strauss, Peter
(86) Internationale Anmeldenummer: PCT/EP2006/011222
(87) Internationale Veröffentlichungsnummer: WO 2007/068334

(56) Entgegenhaltungen:
- EP-A1- 0 652 138
- EP-A1- 1 038 732
- EP-A2- 1 036 715
- EP-A2- 1 103 428
- WO-A-01/00478
- DE-A1-102004 007 571
- JP-A- 59 006 151

## Beschreibung

Moderne Stoßfängersysteme für die Frontpartie von Kraftfahrzeugen weisen allgemeinen eine in der vertikalen Richtung gegliederten Aufbau auf, mit einer oberen Region, die konstruiert ist, und Zusammenstöße mit entgegen kommenden Fahrzeugen abzufangen, und einer unteren Region, die konstruiert ist, um im Falle des Zusammenstoßes mit einem Fußgänger das Schienbein des Fußgängers aufzufangen und der durch eine übermäßige Verformung dessen Kniegelenkes des Fußgängers zu vermeiden, die bei einem ungeschützten Zusammenprall mit der oberen Region des Stoßfängers zu schweren Knieverletzungen führen könnte.

Stoßfängersysteme dieser Art sind z. B. aus EP 1 072 476 A2, EP 1 286 863 A2 und EP 1 038 732 A1 bekannt. Ein Stoßfängersystem nach dem Oberbegriff des Anspruchs 1 ist insbesondere aus EP 1 072 476 bekannt.

Das den unteren Bereich der Außenhaut abstützende Trägerteil ist hier entweder direkt an Längsträgern des Fahrzeugsrahmens oder an einem Montageträger befestigt. Die direkte Befestigung an dem Längsträger gestaltet sich in der Praxis oft aus Platzgründen und aus Gründen der Zugänglichkeit für die Montage als schwierig. Die Bereitstellung eines speziellen Montageträgers ist mit Kosten verbunden und erhöht den Aufwand beim Zusammenbau des Fahrzeugs.

Ein Stoßfängersystem nach dem Oberbegriff des Anspruchs 1 ist aus EP 1 036 715 bekannt. Ein Querbalken dieses Stoßfängersystems hat einen im Wesentlichen C-förmigen Querschnitt, wobei an äußere Schenkel des C-Profils jeweils ein vertikaler Flansch anschließt, an dem Tragarme befestigt sind. Die Tragarme können Profile vom gleichen Typ wie der Querbalken oder Hohlprofile sein.

Aufgabe der Erfindung ist, ein Stoßfängersystem anzugeben, das bei ausreichender Steifigkeit ein geringes Gewicht aufweist.

Die Aufgabe wird gelöst durch ein Stoßfängersystem mit den Merkmalen des Anspruchs 1

Crashboxen, die die Aufprallenergie bei Fahrzeugzusammenstößen mit geringen Geschwindigkeiten absorbieren, um dadurch den Rahmen des Fahrzeugs vor Beschädigung zu schützen, sind bei heutigen Fahrzeugen verbreitet. Diese Crashboxen sind mit dem Rahmen, insbesondere mit Längsträgern des Rahmens, meistens über Flanschplatten verbunden. Die Erfindung nutzt diese üblicherweise ohnehin vorhandenen Flanschplatten gleichzeitig als Verbindungspunkte zur Befestigung des dem unteren Bereich der Außenhaut abstützenden Trägerteils.

Der untere Bereich der Stoßfänger-Außenhaut muss zwar einerseits nachgiebig sein, um eine übermäßige, zu starken Verletzungen führenden Verzögerung des Beins eines angefahrenen Fußgängers zu vermeiden, andererseits jedoch steif genug, um dieses bereits merklich zu verzögern, während die darüber liegende stauchbare Struktur sich noch unter dem Aufprall des Fußgängers verformt, um so dessen Beine in Drehung zu versetzen und vor einer übermäßigen Beanspruchung der Kniegelenke zu schützen. Um diesen Anforderungen zu genügen, ist das Trägerteil vorzugsweise aus einen elastischen Kunststoffmaterial einteilig gefertigt.

Bei dem Kunststoffmaterial kann es sich insbesondere um ein Polyamid, wie etwa von der BASF AG unter der Handelsbezeichnung Ultramid vertrieben, handeln.

Um die Steifigkeitsanforderungen an das Trägerteil zu erfüllen, ist dessen Kunststoffmaterial vorzugsweise mit gering dehnbaren Fasern, wie etwa Glasfasern, versetzt.

Um die Befestigung des Trägerteils an den Flanschplatten der Crashboxen zu vereinfachen, haben die Flanschplatten vorzugsweise einen über den Querschnitt der Crashboxen nach unten überstehenden Bereich, an dem das Trägerteil befestigt ist.

Eine zusätzliche Versteifung von Querbalken und Tragarmen ist erreichbar durch zwischen den äußeren Schenkeln parallel zu diesen verlaufende Rippen. Auch diese gehen zwischen Querbalken und Tragarme vorzugsweise kontinuierlich ineinander über, um eine homogene Lastverteilung in dem Trägerteil zu erreichen.

Ein in Draufsicht geschwungener Verlauf der Tragarme, vorzugsweise ein S-förmig geschwungener Verlauf, ermöglicht es auch den Tragarmen, im Falle eines Fußgängerunfalls nachzugeben.

Weitere Merkmale und Vorteile der Erfindung ergeben sich aus der nachfolgenden Beschreibung von Ausführungsbeispiel unter Bezugnahme auf die beigefügten Figuren. Es zeigen:
Fig. 1 eine perspektivische Ansicht eines erfindungsgemäßen Stoßfängersystems gemäß einer ersten Ausgestaltung;
Fig. 2 einen Schnitt durch einen Querbalken eines Trägerteiles des Stoßfängersystems von Fig. 1;
Fig. 3 einen Schnitt durch einen Tragarm des Trägerteiles;
Fig. 4 einen Längsschnitt durch ein Trägerteil gemäß einer zweiten Ausgestaltung der Erfindung;
Fig. 5 einen vertikalen Teilschnitt durch die Frontpartie eines Kraftfahrzeugs mit einem erfindungsgemäßen Stoßfängersystem entlang einer Längsmittelebene des Fahrzeugs; und
Fig. 6 einen zu Fig. 5 analogen Teilschnitt entlang einer zu der Schnittebene der Fig. 5 parallel versetzten Schnittebene.
Fig. 7 einen zu Fig. 5 analogen Teilschnitt entlang einer Längsmittelebene des Fahrzeugs gemäß einer abgewandelten Ausgestaltung.

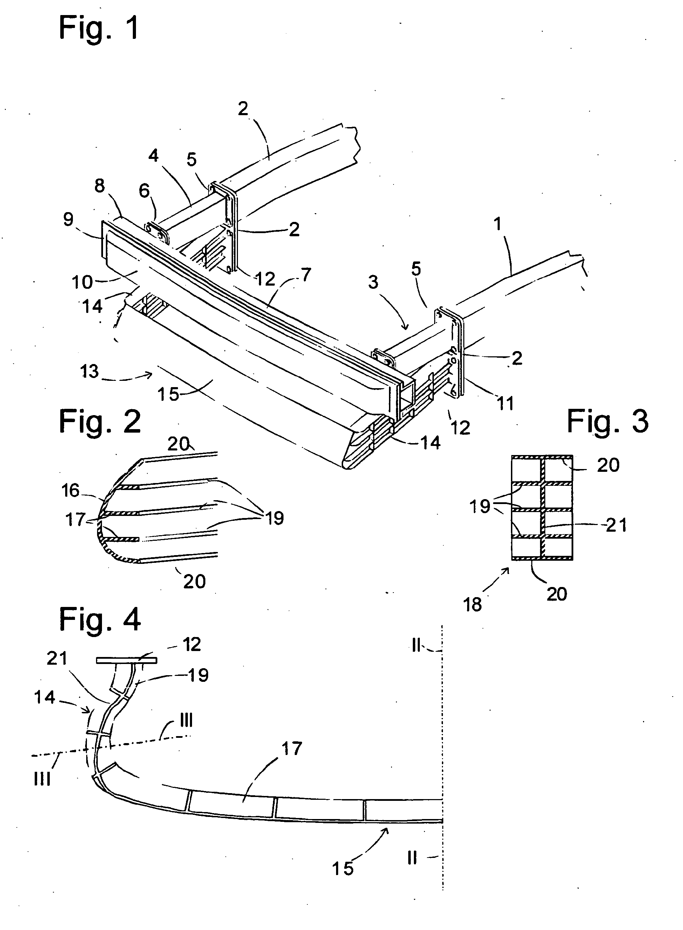

Fig. 1 zeigt in perspektivischer Ansicht die vorderen Bereiche von zwei Längsträgern 1, die Bestandteil der Tragstruktur einer Kraftfahrzeugkarosserie sind. Diese Längsträger 1 sind an ihren vorderen Enden in an sich bekannter Weise mit angeschweißten Flanschplatten 2 versehen, an denen die Längsträger 1 verlängernde Crashboxen 3 befestigt sind. Die Crashboxen 3 sind jeweils gebildet durch ein in der hier gezeigten Ausgestaltung vierkantiges Rohrstück 4, dessen Belastbarkeit in Längsrichtung deutlich kleiner ist als die der Längsträger 1 und das an seinen zwei Enden durch Flanschplatten 5, 6 verschlossen ist. Das Rohrstück 4 ist in der Figur mit ebenen Wänden dargestellt; die Wände können aber auch einen gewellten Verlauf aufweisen, um die Stauchbarkeit der Crashbox 3 zu verbessern. Die hintere Flanschplatte 5 ist mit der abschließenden Flanschplatte 2 des Längsträgers 1 verschraubt, die vordere Flanschplatte 6 dient zur Befestigung eines Stoßfänger-Querträgers 7. Der Stoßfänger- Querträger 7 ist eine belastbare hohle Metallstruktur, die beispielsweise, wie in der Figur gezeigt, durch ein Profil 8 von im Wesentlichen U-förmigem Querschnitt und einen langgestreckten Blechstreifen 9 gebildet ist, deren freie Kanten miteinander verschweißt sind. An der Vorderseite des Streifens 9 ist eine stauchbare Struktur, hier in Form eines Körpers 10 aus einem unelastisch stauchbaren Schaumstoffmaterial, angebracht.

Die Flanschplatte 2 des Längsträgers 1 ist größer als zum Befestigen der Crashbox 3 erforderlich; an einem nach unten gerichteten Vorsprung 11 der Flansch- platte 2 ist eine weitere Flanschplatte 12 angebracht, die einteiliger Bestandteil eines Trägerteiles 13 aus glasfaserverstärktem Kunststoff, insbesondere aus Polyamid, ist. Das Trägerteil 13 umfasst zwei Tragarme 14, die sich von den an den Längsträgern befestigten Flanschplatten 12 schräg abwärts und nach vorn erstrecken und miteinander durch einen Querbalken 15 verbunden sind.

Aufgrund des Höhenversatzes zwischen den Enden der Tragarme 14 sind diese bei einem Zusammenstoß mit einem Fußgänger nicht nur einer Kraft in ihrer Längsrichtung, sondern auch einem Biegemoment ausgesetzt, was die Verformbarkeit der Tragarme und damit die Elastizität des gesamten Stoßfängersystems verbessert.

Der Querbalken erstreckt sich bezogen auf die Fahrzeuglängsrichtung vor dem Stoßfänger-Querträger 7 und befindet sich in etwa lotrecht unterhalb des stauchbaren Schaumstoffkörpers 10. Der Querbalken 15 hat, wie in Fig. 2 gezeigt, einen Querschnitt mit einem äußeren Bogen 16 in Form eines C und einer Mehrzahl von von der konkaven Seite des Bogens 16 abstehenden Rippen 17.

Die Tragarme 14 haben einen in Fig. 3 gezeigten Querschnitt in Form eines I-Profils 18, von dessen vertikalem zentralem Steg 21 parallele Rippen 19 in entgegengesetzte Richtungen abstehen. Wie in Fig. 2 zu erkennen, schließen die Rippen 19 an der Innenseite des I-Profils 18 stufenlos an die Rippen 17 des Querbalkens 15 an, und die oberen und unteren Enden des Bogens 16 gehen über in parallele horizontale Stege 20 des I-Profils 18, um im Falle eines Zusammenstoßes eine möglichst starke auf den Querbalken 15 einwirkende Kraft in die Tragarme 14 und über diese in die Längsträger 1 einleiten zu können, bevor die Verbindung zwischen Querbalken 15 und Tragarmen 14 nachgibt.

Eine zweite Ausgestaltung des Trägerteiles 15 ist in Fig. 4 in einem halben Längsschnitt dargestellt, wobei eine mit II-II bezeichnete strichpunktierte Linie eine Symmetrieebene des Trägerteiles 13 darstellt. Der Querschnitt des Trägerteiles entlang der Symmetrieebene II-II entspricht dem in Fig. 2 dargestellten Querschnitt; ein Schnitt entlang der mit III-III bezeichneten Ebene entspricht dem in Fig. 3 gezeigten.

Der vertikale Steg 21 des Tragarmes 14 hat in Draufsicht betrachtet ausgehend von der Flanschplatte 12 einen S-förmig geschwungenen Verlauf und geht stufenlos über in den Bogen 16 des Querbalkens 15. Die S-förmig geschwungene Gestalt des Tragarmes 14 erleichtert es diesem, unter einer von vorn auf das Fahrzeug einwirkenden Kraft flexibel nachzugeben.

Die gleiche Wirkung ist natürlich auch mit einem (nicht eigens in einer Figur dargestellten) in Seitenansicht geschwungenen, vorzugsweise S-förmig geschwungenen, Verlauf der Tragarme zu erreichen.

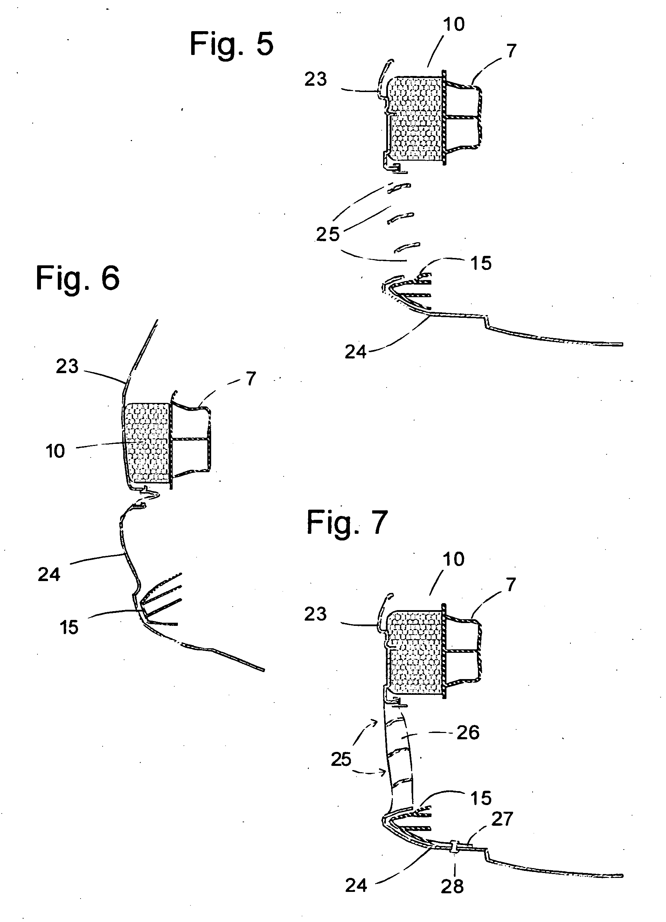

Figuren 5 und 6 zeigen stark schematisierte Schnitte durch die Frontpartie einer Kraftfahrzeugkarosserie entlang von deren Längsmittelebene bzw. einer hierzu parallel versetzten Ebene. Der Stoßfänger-Querträger 7 hat im Wesentlichen die gleiche Struktur wie in Fig. 1 gezeigt, allerdings mit einer zusätzlichen horizontalen Zwischenwand 22, die sich durch den inneren Hohlraum des Stoßfänger-Querträgers 7 erstreckt, um diesen zu versteifen. Ein oberer Bereich 23 einer nachgiebigen Außenhaut aus Kunststoff ist mit dem Querträger 7 über den stauchbaren Schaumstoffkörper 10 verbunden. Ein unterer Bereich 24 der Außenhaut ist an dem Querbalken 15 aufgehängt, indem er dessen Vorderseite formschlüssig umgreift. Zwischen oberem und unterem Bereich 23, 24 befinden sich Lüftungsschlitze 25.

Bei einem Zusammenstoß des Fahrzeuges mit einem Fußgänger ist der obere Bereich der Außenhaut 23 zunächst leicht verformbar und gibt unter dem Aufprall des Fußgängers nach, wobei der Schaumstoffkörper 10 gestaucht wird. Der untere Bereich 24, der von dem Querbalken 15 unterstützt ist, ist im Vergleich hierzu fester, so dass die Beschleunigung, die dieser auf den Unterschenkel des Fußgängers ausübt, stärker ist als die von dem oberen Bereich 23 auf Knie oder Oberschenkel ausgeübte Beschleunigung. So gerät das Bein des Fußgängers in Drehung, und eine Überbelastung des Kniegelenkes wird vermieden, wenn der Fußgänger anschließend auf die Motorhaube aufschlägt.

Fig. 7 zeigt wie Fig. 5 einen schematisierten Schnitt durch die Frontpartie einer Kraftfahrzeugkarosserie entlang von deren Längsmittelebene gemäß einer leicht abgewandelten Ausgestaltung. Ein die Lüftungsschlitze 25 umgebender Rahmen oder eine sie durchteilende vertikale Strebe, mit 26 bezeichnet, versteift die Außenhaut und erhöht ihre Zugbelastbarkeit in vertikaler Richtung. Ihr unterer Bereich 24 umgibt formschlüssig den Querbalken 15. Am unteren Rand des Querbalkens 15 sind ein oder mehrere zurückspringende Laschen 27 gebildet, an denen durch Schrauben 28, Nieten oder dergleichen die Außenhaut befestigt ist. Wenn im Falle eines Zusammenstoßes mit einem Fußgänger der Querträger 15 nach unten ausweicht, so führt dies zu einer Zugbeanspruchung der Außenhaut. Die Außenhaut wirkt also als eine Versteifung des Trägerteils 13, so dass ein gewünschtes Maß an Festigkeit des Trägerteils 13 mit geringerem Materialaufwand erzielbar ist als bei einer Ausgestaltung, wo Außenhaut und Trägerteil nicht aneinander befestigt sind..

Natürlich könnte man eine entsprechende Befestigung der Außenhaut auch direkt an dem Querbalken 15, ohne die Laschen 27, vorsehen. Die Laschen sind jedoch bevorzugt, weil sie es erlauben, die Schrauben 28 oder andere Befestigungsmittel weit nach hinten versetzt am Fahrzeug anzubringen, an einer Stelle, wo sie für einen vor dem Fahrzeug stehenden Betrachter nicht sichtbar sind.

### Bezugszeichenliste

- Längsträger: 1
- Flanschplatte: 2
- Crashbox: 3
- Rohrstück: 4
- Flanschplatte: 5, 6
- Querträger: 7
- Profil: 8
- Blechstreifen: 9
- Körper: 10
- Vorsprung: 11
- Flanschplatte: 12
- Trägerteil: 13
- Tragarm: 14
- Querbalken: 15
- Bogen: 16
- Rippe: 17
- I-Profil: 18
- Rippe: 19
- Steg: 20, 21
- Zwischenwand: 22
- oberer Bereich: 23
- unterer Bereich: 24
- Lüftungsschlitze: 25
- Strebe: 26
- Lasche: 27
- Schraube: 28

## Patentansprüche

1. Stoßfängersystem für ein Kraftfahrzeug mit einem Stoßfängerquerträger (7), der an einem steifen Rahmen (1) des Kraftfahrzeugs gehalten ist, einer verformbaren Stoßfänger-Außenhaut (23, 24), einer zwischen einem oberen Bereich (23) der Außenhaut und dem Querträger (7) angeordneten stauchbaren Struktur (10) und einem den unteren Bereich (24) der Außenhaut abstützenden Trägerteil (13), bei dem das Trägerteil (13) gemeinsam mit einer den Querträger (7) tragenden Crash-Box (3) an Flanschplatten (2) des Rahmens verankert ist und das Trägerteil (13) einen Querbalken (15) und zwei den als ein C-Profil realisierten Querbalken (15) mit den Flanschplatten (2) verbindende Tragarme (14) umfasst, **dadurch gekennzeichnet, dass** das Trägerteil (13) einteilig aus einem elastischen Kunststoffmaterial gefertigt ist und dass die Tragarme (14) als I-Profile (18) realisiert sind, wobei äußere Schenkel des C-Profils kontinuierlich in äußere Stege (20) jedes I-Profils (18) übergehen.

2. Stoßfängersystem nach Anspruch 1, **dadurch gekennzeichnet, dass** das Kunststoffmaterial ein Polyamid ist.

3. Stoßfängersystem nach Anspruch 1 oder 2, **dadurch gekennzeichnet, dass** das Kunststoffmaterial mit Fasern versetzt ist.

4. Stoßfängersystem nach einem der vorhergehenden Ansprüche, **dadurch gekennzeichnet, dass** das Trägerteil (13) an einem über den Querschnitt der Crashboxen (3) nach unten überstehenden Bereich der Flanschplatten (2) verankert ist.

5. Stoßfängersystem nach einem der vorhergehenden Ansprüche, **dadurch gekennzeichnet, dass** der Querbalken (15) und die Tragarme (14) durch zwischen den äußeren Stegen (20) verlaufende Rippen (19, 17) versteift sind.

6. Stoßfängersystem nach Anspruch 5, **dadurch gekennzeichnet, dass** die Rippen (19, 17) des Querbalkens (15) und der Tragarme (14) kontinuierlich ineinander übergehen.

7. Stoßfängersystem nach einem der vorhergehenden Ansprüche, **dadurch gekennzeichnet, dass** die Tragarme (14) einen geschwungenen Verlauf aufweisen.

## Claims

1. A bumper system for a motor vehicle, comprising a bumper cross member (7) which is held on a stiff frame (1) of the motor vehicle, a deformable outer skin (23, 24) of the bumper, a compressible structure (10) arranged between an upper region (23) of the outer skin and the cross member (7), and a support part (13) which supports the lower region (24) of the outer skin, wherein the support part (13) is secured to flange plates (2) of the frame together with a crash box (3) supporting the cross member (7), and the support part (13) comprises a crossbar (15) and two support arms (14) connecting the crossbar (15) realized as a C-profile with the flange plates (2), **characterized in that** the support part (13) is made integrally from an elastic plastic material and the support arms (14) are realized as I-profiles (18), with the outer legs of the C-profile converging continually into outer webs (20) of each I-profile (18).

2. A bumper system according to claim 1, **characterized in that** the plastic material is a polyamide.

3. A bumper system according to claim 1 or 2, **characterized in that** the plastic material is mixed with fibres.

4. A bumper system according to one of the preceding claims, **characterized in that** the support part (13) is secured to a region of the flange plates (2) which projects downwardly over the cross section of the crash boxes (3).

5. A bumper system according to one of the preceding claims, **characterized in that** the crossbar (15) and the support arms (14) are stiffened by ribs (19, 17) extending between the outer webs (20).

6. A bumper system according to claim 5, **characterized in that** the ribs (19, 17) of the crossbar (15) and the support arms (14) converge continually into one another.

7. A bumper system according to one of the preceding claims, **characterized in that** the support arms (14) have a curved progression.

## Revendications

1. Système de pare-chocs pour un véhicule à moteur avec un support transversal de pare-chocs (7) qui est retenu sur un châssis (1) rigide du véhicule à moteur, une enveloppe extérieure de pare-chocs (23, 24) déformable, une structure compressible (10) disposée entre une partie supérieure (23) de l'enveloppe extérieure et le support transversal (7) et une partie portante (13) soutenant la partie inférieure (24) de l'enveloppe extérieure, dans lequel la partie portante (13) est ancrée avec un caisson anticollision (3) portant le support transversal (7) sur des flasques (2) du châssis et la partie portante (13) comprend une traverse (15) et deux bras portants (14) reliant la traverse (15) réalisée comme un profilé en C aux flasques (2), **caractérisé en ce que** la partie portante (13) est fabriquée d'un seul tenant à partir d'une matière plastique élastique et **en ce que** les bras portants (14) sont réalisés comme des profilés en I (18), des bras extérieurs du profilé en C se joignant de façon continu aux âmes extérieures (20) de chaque profilé en I (18).

2. Système de pare-chocs selon la revendication 1, **caractérisé en ce que** la matière plastique est un polyamide.

3. Système de pare-chocs selon la revendication 1 ou 2, **caractérisé en ce que** la matière plastique est additionnée de fibres.

4. Système de pare-chocs selon l'une des revendications précédentes, **caractérisé en ce que** la partie portante (13) est ancrée sur une partie des flasques (2) dépassant vers le bas au-delà de la section des caissons anticollision (3).

5. Système de pare-chocs selon l'une des revendications précédentes, **caractérisé en ce que** la traverse (15) et les bras portants (14) sont raidis par des nervures (19, 17) qui s'étendent entre les âmes extérieures (20).

6. Système de pare-chocs selon la revendication 5, **caractérisé en ce que** les nervures (19, 17) de la traverse (15) et les bras portants (14) se joignent de façon continue.

7. Système de pare-chocs selon l'une des revendications précédentes, **caractérisé en ce que** les bras portants (14) ont une forme arquée.
